# EUROPEAN PATENT APPLICATION

(11) **EP 4 800 425 A1**
(43) Date of publication of application: **02.09.2026**
(21) Application number: 25174550.1
(22) Date of filing: 06.05.2025
(51) Int. Cl.: G01S 7/02, H04B 1/7183, G01S 13/76

(54) **A METHOD**

(30) Priority: 27.02.2025 IN 202541017671
(71) Applicant: NXP B.V., 5656 AG Eindhoven (NL)
(72) Inventor: Baglin, Matthieu, 5656AG Eindhoven (NL); Eisendle, Christian, 5656AG Eindhoven (NL); Varier, Vidya Thekke, 5656AG Eindhoven (NL)
(74) Representative: Krott, Michel

(57) **Abstract**

A method for performing ultra-wide-band (UWB) radio-frequency (RF) frame validation, wherein an UWB frame comprises: a synchronisation header (SYNC) field suitable for synchronisation between a transmitter and a receiver, and a scrambled timestamp sequence (STS) suitable for providing additional integrity and security for ranging measurements. The method comprises: receiving a SYNC channel impulse response (CIR) of an UWB frame; receiving an STS CIR of the UWB frame; comparing peak amplitude values of the SYNC CIR and the STS CIR. If a difference between the peak amplitude values of the SYNC CIR and the STS CIR is greater than a predetermined magnitude difference threshold, then: rejecting the UWB frame; else: comparing polarities of the SYNC CIR and the STS CIR. If the polarities of the SYNC CIR and the STS CIR are different, then rejecting the UWB frame; else: accepting the UWB frame.

## Description

### Field

The present disclosure relates to a method for performing ultra-wide band radio frequency frame validation. In particular for performing frame validation in ranging applications, wherein a frame includes a synchronisation header and a scrambled timestamp sequence.

### Summary

According to a first aspect of the present disclosure there is provided a method for performing ultra-wide band, UWB, radio frequency, RF, frame validation, wherein an UWB frame comprises: a synchronisation header, SYNC, field wherein the SYNC field is suitable for synchronisation between a transmitter and a receiver, and a scrambled timestamp sequence, STS, field wherein the STS field is suitable for providing additional integrity and security for ranging measurements; the method comprising: receiving a SYNC channel impulse response, CIR, of an UWB frame; receiving an STS CIR of the UWB frame; comparing a peak amplitude value of the SYNC CIR to a peak amplitude value of the STS CIR, wherein: if a difference between the peak amplitude value of the SYNC CIR and the peak amplitude value of the STS CIR is greater than a predetermined magnitude difference threshold, then: rejecting the UWB frame; else: comparing a polarity of the SYNC CIR to a polarity of the STS CIR, wherein: if the polarity of the SYNC CIR is different to the polarity of the STS CIR, then: rejecting the UWB frame; else: accepting the UWB frame.

In one or more embodiments, comparing the polarity of the SYNC CIR to the polarity of the STS CIR comprises comparing a polarity of the SYNC CIR at a first index to a polarity of the STS CIR at a second index.

In one or more embodiments: the first index is associated with the peak of the SYNC CIR and the second index is associated with the peak of the STS CIR; or the first index is same as the second index.

In one or more embodiments, the first index is same as the second index.

In one or more embodiments, the first index is either: an index associated with the peak amplitude value of the SYNC CIR, or an index associated with the peak amplitude value of the STS CIR.

In one or more embodiments, the method further comprises: determining an index associated with the peak amplitude value of the SYNC CIR.

In one or more embodiments, the method further comprises: setting the index associated with the peak amplitude value of the SYNC CIR as the first index.

In one or more embodiments, the method further comprises: determining an index associated with the peak amplitude value of the STS CIR.

In one or more embodiments, the method further comprises: setting the index associated with the peak amplitude value of the STS CIR as the first index.

In one or more embodiments, comparing the polarity of the SYNC CIR at the first index to a polarity of the STS CIR comprises: multiplying a real component of the STS CIR, by a complex conjugate of the SYNC CIR, to provide a comparison value; and determining if the comparison value is less than zero.

In one or more embodiments, the method further comprises: defining the predetermined magnitude difference threshold based on a desired security level.

In one or more embodiments, the desired security level is defined by an acceptable Hamming distance range, such that there is an acceptable probability of an attacker randomly guessing an STS field which has a Hamming distance within the acceptable Hamming distance range.

In one or more embodiments, the acceptable probability is defined by a user.

In one or more embodiments, the SYNC CIR and the STS CIR are gain compensated CIRs.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example illegitimate UWB attack frame which may be used in a brute force attack that attempts to determine the STS field of a legitimate UWB frame;
Figure 2 shows an example ranging scenario between device A and device B;
Figure 3 shows example binomial cumulative distribution function plots of the NEFA against Hamming distance for BPRF and HPRF frames;
Figure 4a shows example CIRs from SYNC and STS fields of a UWB frame in an example with a Hamming distance of zero;
Figure 4b shows example CIRs from SYNC and STS fields of a UWB frame in an example with a Hamming distance of 2000;
Figure 5 shows a plot of the distributions of Hamming distances against the number of frames accepted for a theoretical ranging system with an STS length of 4096 bit, when using only the magnitude check for frame validation;
Figure 6 shows an example method for performing UWB RF frame validation, according to embodiments of the present disclosure;
Figure 7 shows a plot of the distributions of Hamming distances against the number of frames accepted for a theoretical ranging system with an STS length of 4096 bit, when using a magnitude check plus an inversion check for frame validation, according to embodiments of the present invention;
Figure 8 shows a plot of the real parts of the SYNC CIR and STS CIR for an UWB attack frame, wherein the STS field is a random bit sequence with a Hamming distance of more than half the STS length;
Figure 9a shows the real part of an example UWB pulse under non-ideal circumstances;
Figure 9b shows the imaginary part of the UWB pulse of Figure 9a;
Figure 9c shows the magnitude of the UWB pulse of Figure 9a;
Figure 10a shows the real part of another example UWB pulse under non-ideal circumstances;
Figure 10b shows the imaginary part of the UWB pulse of Figure 10a;
Figure 10c shows the magnitude of the UWB pulse of Figure 10a;
Figure 11 shows an example down-sampled version of the pulse of Figure 9, according to a common down-sampling rate;
Figure 12 shows a plot of the absolute values of a SYNC CIR and an STS CIR against samples, for an example UWB frame with a Hamming distance of zero; and
Figure 13 shows a plot of the real part of the SYNC CIR and the STS CIR against samples, for the example UWB frame of Figure 12.

### Detailed Description

Ultra-Wideband (UWB) radio frequency (RF) technology has seen increased adoption in secure ranging due to the ability to form an accurate Time-of-Flight (ToF) estimation, which facilitates accurate relative position determination. As with any wireless standards, several attacks are possible on UWB systems. Counter measures have been adopted by some of these standards, such as the fine ranging consortium (FiRa) standard, to mitigate these attacks but there are still some cases where attacks might succeed, even with a small probability.

The UWB Institute of Electrical and Electronics Engineers (IEEE) 802.15.4 and IEEE 802.15.4z standards define the structures of the frames that are exchanged during ranging. As such, the different fields that a frame may contain are:
- A Synchronization header (SYNC) field which is transmitted at the beginning of the UWB frame for synchronization between transmitter and receiver. It contains a predefined pattern of pulses which repeat a specific number of times.
- A start of frame delimiter (SFD) field which is used for time-stamping the frame.
- A physical layer header (PHR) which provides useful physical layer information and a physical payload or a physical layer service data unit (PSDU).
- A scrambled timestamp sequence (STS) field which is used to provide additional integrity and security for ranging measurement.

The STS field is what causes the biggest challenge for an attacker to intercept and change the timestamps of a ranging exchange. The STS field is often generated by a deterministic random bit generator, such as a random bit generator based on the advanced encryption standard (AES) with a 128-bit key length. Because the STS pattern is a-priori unknown by the attacker, an attacker may only break the UWB security by guessing the bits of the STS field. The number of bits of the STS field is configurable and may also depend on the pulse repetition frequency of the network.

The following disclosure provides a method for performing UWB RF frame validation. The method disclosed herein has the technical result of decreasing the probability of an attacker correctly guessing the bits of the STS field. In many circumstances, higher levels of security can lead to possible misdetections, however the method disclosed herein results in an increase in the level of security while keeping the same misdetection rate as conventional techniques.

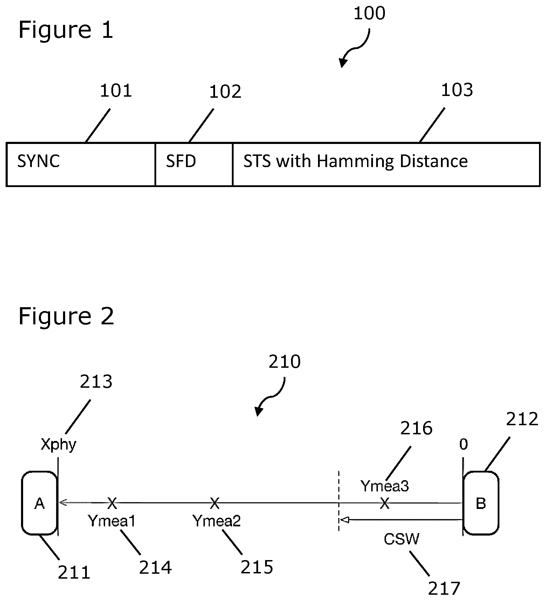

Figure 1 shows an example illegitimate UWB attack frame 100 which may be used in a brute force attack that attempts to determine the STS field of a legitimate UWB frame. The UWB attack frame 100 includes a SYNC field 101, an SFD field 102 and an STS field 103. The UWB attack frame 100 may also include illegitimate PHR and PSDU fields (not shown).

The STS field 103 of the illegitimate UWB attack frame 100 has a Hamming distance, wherein the Hamming distance is the number of bits in the STS field that are guessed incorrectly in the UWB attack frame 100, as compared to the STS bits which are expected by the receiver.

Figure 2 shows an example ranging scenario 210 between device A 211 and device B 212. The physical distance between device A 211 and device B 212 is denoted by Xphy 213. During an individual ranging event, the measured distance between device A 211 and device B 212 is denoted by Ymea 214, 215, 216. Whenever a measured distance Ymea 214, 215, 216 is less than the actual physical distance Xphy 213, we call this test a false acceptance (FA) event.

A specific critical search window (CSW) 217 is of a distance shorter than the physical first path. An attack is effective when a distance within the CSW 217 is recognized and reported. For example, in a ranging scenario between a locked door and a key, wherein the door is configured to be unlocked when the key is less than two metres away, and when the key is more than two metres away, the CSW has a length of two metres. This is because an attacker could falsely reduce the measured distance to below two metres, such that they would be able to illegitimately unlock the door. If an attacker falsely reduced the measured distance to a distance greater than two metres, the door would not unlock, and therefore the consequences of this attack are not severe.

Accordingly, an effective false acceptance (EFA) event is counted only when the measured distance lies in the CSW 217, and the actual physical distance Xphy 213 is greater than the CSW 217 i.e., Ymea ∈ CSW, *X_{phy} > CSW* i.e., $EFA ≜$ Prob(Ymea ∈ CSW*,X_{phy}* > *CSW*)*.* Further, we can define the normalized EFA (NEFA) by normalizing the EFA with the length of the corresponding CSW 217, i.e., $NEFA ≜ EFA \div L$, where L denotes the length of the CSW in meters.

Figure 2 shows three example false measurements Ymea1, Ymea2, Ymea3 214, 215, 216 made by an attacker. In this example, only Ymea3 216 is counted as an EFA since it lies in the CSW 217. Both Ymea1 214 and Ymea2 215 will not sacrifice security since they are outside the CSW 217.

The FiRa specification (FiRa_PHY Technical_Specification version 2.0) introduces the parameter NEFA to determine the Hamming distance threshold for when a frame is to be considered valid by a UWB receiver.

In the FiRa specification, the physical layer (PHY) shall support at least the following three security levels in terms of NEFA when performing secure ranging with application-specific CSWs:
Low (NEFA ≤ 2⁻¹⁰),
Medium (NEFA ≤ 2⁻²⁰),
High (NEFA ≤ 2⁻⁴⁸).

NEFA is derived from the classical results of the binomial distribution. The Hamming distance threshold (THR) is the particular Hamming Distance after which the illegitimate frame is rejected by the receiver. The range of THR is given in Equation 1. STS length is given in Equation 2 and depends on the configuration of the ranging exchange, where BPRF refers to frames for use in a base pulse repetition frequency mode and HPRF refers to frames for use in a higher pulse repetition frequency mode. $THR = 0 to stsLength / 2 - 1$ $stsLength = \left\{\begin{matrix}4096 \left(BPRF\right) \\ 8192 \left(HPRF\right)\end{matrix}\right.$

The probability, p for uniform unbiased bit flipping is given by p = Prob(bit = 0) = Prob(bit = 1) = 0.5. NEFA is defined as given in Equation 3. $\begin{matrix}NEFA = Prob \left(HammingDistance\leq THR\right) \\ = F \left(\left.THR\right|stsLength,p\right) \\ = {\sum }_{i = 0}^{THR} \left(\begin{matrix}stsLength \\ i\end{matrix}\right) {p}^{i} {\left(1-p\right)}^{stsLength - i}\end{matrix}$

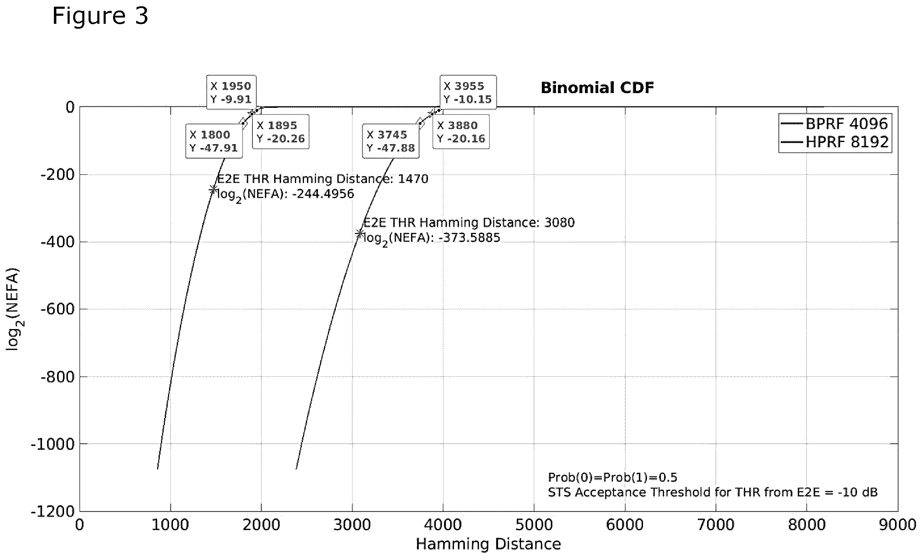

Figure 3 shows example binomial cumulative distribution function plots of the log2(NEFA) against Hamming distance for BPRF and HPRF frames. The figure also shows the THR values for other security levels defined by FiRa for BPRF and HPRF frames.

In an example, for an STS field of length 4096 and a random guess of 4096 bits, the probability that the Hamming distance between the correct STS field and the random guess is less than 1950 is around 2⁻¹⁰ as seen in Figure 3. Therefore, to provide a low level of security according to the FiRa specification, a received STS field with a Hamming distance greater than a THR of 1950 must be rejected in this example.

One method to determine whether a frame needs to be rejected or not within a UWB ranging application is to compare the peak magnitudes of the SYNC and STS channel impulse responses (CIR). The magnitude comparison between the SYNC and STS CIRs main paths preferably includes some equalization to adapt to the different correlation and binning configurations and also to the analog and digital gain settings. In this way, the SYNC CIR and the STS CIR may be gain compensated CIRs.

The CIR of each field may be generated by any suitable means. The difference between the peak magnitudes is checked against a threshold. That is, if the difference between the magnitudes of the peak value of the SYNC CIR and the peak value of the STS CIR peak is greater than a predetermined magnitude difference threshold amount, the frame is rejected, otherwise, the frame is accepted. Hereinafter this method will be referred to as a magnitude check. The predetermined magnitude difference threshold amount is set in order to achieve a desired value for the THR, as will be appreciated from this disclosure.

The peaks of the CIRs from the SYNC and STS fields of a legitimate UWB frame are expected to be equal, as the CIRs are normalized (the magnitude check is performed after gain compensation in this embodiment). The magnitude check ensures that the difference between the gain compensated peaks is less than the predetermined magnitude difference threshold for each accepted UWB frame.

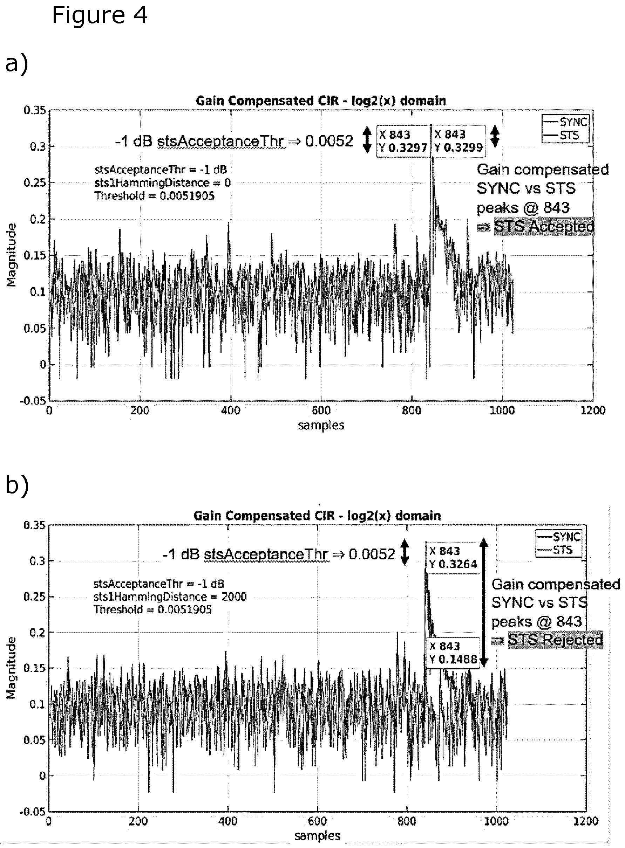

Figures 4a and 4b shows example CIRs from the SYNC and STS fields of a UWB frame with different Hamming distances. Figure 4a shows example CIRs from the SYNC and STS fields in an example with a Hamming distance of zero. Figure 4b shows example CIRs from the SYNC and STS fields in an example with a Hamming distance of 2000. In these examples, the main peak is seen at the acquisition path index (x = 843), which is also the maximum path index. This is true for both the SYNC and STS fields.

Regarding Figure 4a, because the Hamming Distance is 0 for the received STS field, the peaks of the CIRs are of comparable magnitude. Therefore, the difference in magnitude of the peaks is less than the predetermined magnitude difference threshold, and so the UWB frame is accepted. Regarding Figure 4b, because the Hamming Distance of the received frame is 2000, the magnitude of the peak from the STS CIR is much smaller than the magnitude of the peak from the SYNC CIR. Therefore, the difference in magnitude of the peaks is greater than the predetermined magnitude difference threshold, and so the UWB frame is rejected.

In some embodiments, the method includes defining the predetermined magnitude difference threshold based on a desired security level, wherein the desired security level is defined by an acceptable Hamming distance range, such that there is an acceptable probability (that is, an acceptably low probability) of an attacker randomly guessing an STS field which has a Hamming distance within the acceptable Hamming distance range, wherein the acceptable probability is defined by a user.

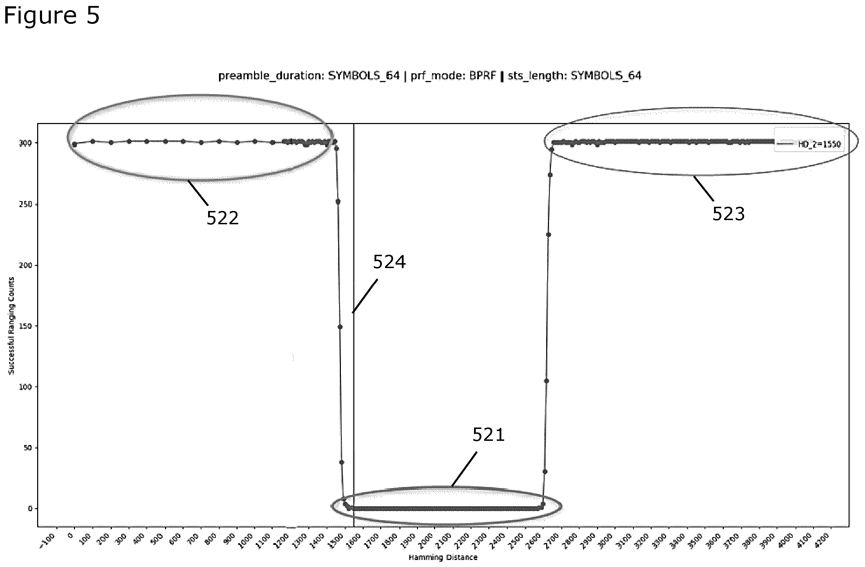

Figure 5 shows a plot of the distributions of Hamming distances against the number of frames accepted for a theoretical ranging system with an STS length of 4096 bit, when using only the magnitude check for frame validation.

A totally random STS field guess within this ranging system would likely have an average Hamming distance of 2048 (i.e., half of the total STS length of 4096) because half of the bits would be wrong. The receiver rejects all the frames in a first zone 521, which is a range of Hamming distances centred on 2048, based on the magnitude check, as discussed above. The boundaries of this range of Hamming distances (the first zone 521) are defined by THR, the determination of which is discussed above with reference to Figure 3. Figure 5 also shows a threshold 524 at which the number of accepted frames should be zero, which is approximately THR.

The receiver accepts all of the frames in a second zone 522, which is defined by frames with a Hamming distance of between zero and a value close to THR (which, in this example is approximately 1550). The frames within this zone are accepted based on the magnitude check, as discussed above. This is because the CIRs from these frames have peaks with similar magnitudes for the SYNC and STS fields, which is to be expected because a low Hamming distance is representative of the content of the received frame having a good match with the expected content.

However, when using the above-described method, the frames within a third zone 523, which is defined by frames with a Hamming distance of between 4096 - THR and 4096, are also accepted as legitimate frames. This is because the CIRs from these frames have peaks with similar magnitudes (with an opposite sign) for the SYNC and STS fields, in the same way as frames from the first zone 522. This is because an STS field with a very high Hamming distance is equal to the inverse of an STS field with a very low Hamming distance, and the polarities of the CIR peaks have no impact on the comparison of the magnitudes. This is clearly undesirable, as frames with a high Hamming distance should not be accepted because their content is not a good match with the expected content. Furthermore, this means that the chance of an attacker successfully guessing an STS field within the NEFA threshold is double the expected amount.

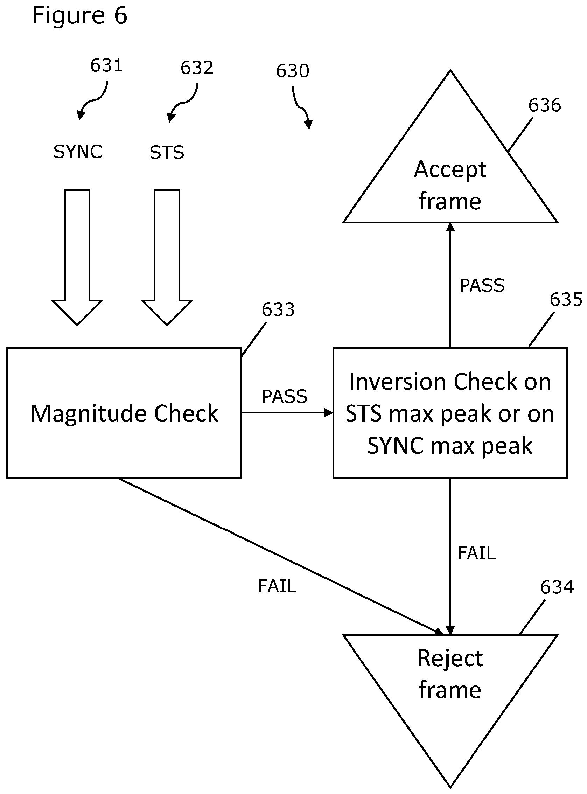

Figure 6 shows an example method 630 for performing UWB RF frame validation, according to embodiments of the present disclosure.

The method 630 includes receiving a SYNC CIR 631 and an STS CIR 632 of an UWB frame, and performing the magnitude check, at step 633, as discussed above with reference to Figure 4.

If the magnitude check, performed at step 633, is failed, that is, if a difference between the peak amplitude value of the SYNC CIR 631 and the peak amplitude value of the STS CIR 632 is greater than a predetermined magnitude difference threshold, then the method 630 includes rejecting the UWB frame at step 634. Resultingly, UWB frames with a Hamming distance that falls within the first (middle) zone of Figure 4 are rejected. If the magnitude check, performed at step 633, is passed, that is if the difference between the peak amplitude value of the SYNC CIR 631 and the peak amplitude value of the STS CIR 632 is not greater than a predetermined magnitude difference threshold, then the method includes performing an inversion check at step 635.

The inversion check, performed at step 635, includes comparing a polarity of the peak value of the SYNC CIR 631 to a polarity of the peak value of the STS CIR 632. If the polarity of the peak value of the SYNC CIR 631 is different to the polarity of the peak value of the STS CIR 632, then the method includes rejecting 634 the UWB frame. In this way, UWB frames with a very high Hamming distance, which would otherwise fall into the third (right) zone of Figure 5, are rejected. Otherwise, the method 630 includes accepting, at step 636, the UWB frame.

Accepting the UWB frame, performed at step 636, comprises determining that the UWB frame is legitimate such that it may be used for ranging. Whereas rejecting the UWB frame, performed at step 634, comprises determining that the UWB frame is illegitimate, and subsequently ignoring the frame such that it may not be used for ranging.

In this way, the security of the ranging is improved. As such, the probability of acceptance of a randomly derived illegitimate attack frame is decreased by a factor of 2 when compared to performing a magnitude check alone.

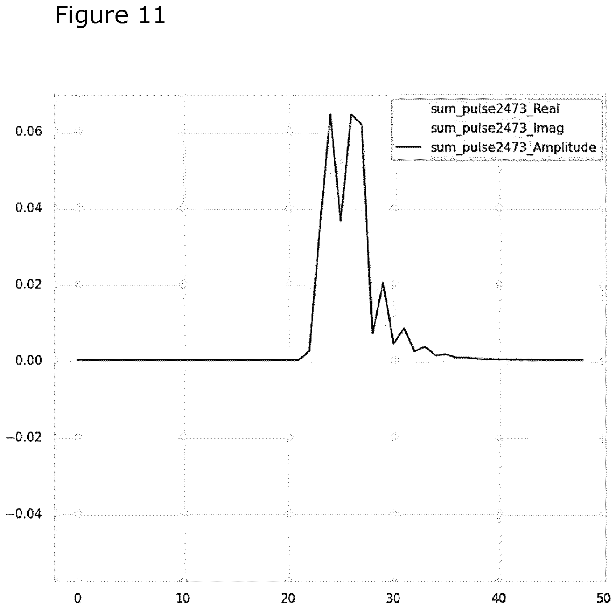

In some embodiments, comparing the polarity of the SYNC CIR to the polarity of the STS CIR includes comparing a polarity of the SYNC CIR at a first index to a polarity of the STS CIR at a second index. The first index may be associated with the peak of the SYNC CIR and the second index may be associated with the peak of the STS CIR (as discussed above). Alternatively, the first index may the same as the second index, in which case they can both be referred to as the first index. This may be beneficial for reasons that will be discussed below with reference to Figure 11.

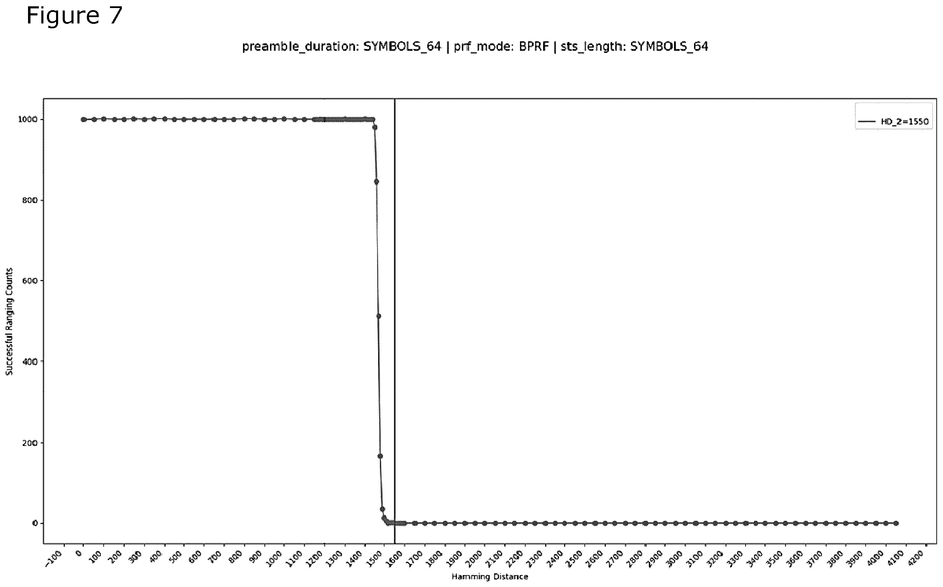

Figure 7 shows a plot of the distributions of Hamming distances against the number of frames accepted for a theoretical ranging system with an STS length of 4096 bits, when using the above-described method (that is, the magnitude check plus the inversion check of Figure 6) for frame validation, according to embodiments of the present invention. As is apparent from the figure, only UWB frames with a Hamming distance below THR are accepted. This is contrast to the plot of Figure 5 in which UWB frames with a range of relatively high Hamming distances is accepted.

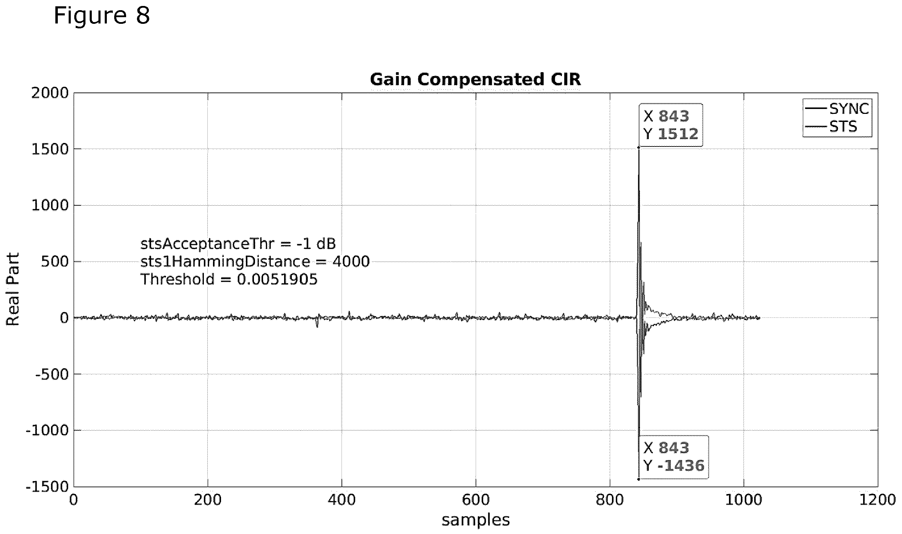

Figure 8 shows a plot of the real parts of the SYNC CIR and STS CIR for an UWB attack frame, wherein the STS field includes a random bit sequence with a Hamming distance of more than half the STS length (in this case an STS field with length 4096 and a Hamming distance of 4000). As is clear from the figure, the STS CIR has a phase shift of 180° when compared to the SYNC CIR. Therefore, when using the method described with reference to Figure 6, the UWB attack frame is rejected. Contrastingly, the magnitudes of the peaks in this example could be within the predetermined magnitude difference threshold, and would therefore be falsely accepted by the magnitude comparison check alone.

The inversion check described above can be performed using Equation 4. $real \left({CIR}_{STS}\left({maxPathIdx}_{STS}\right)∗\overline{{CIR}_{SYNC} \left({maxPathIdx}_{SYNC}\right)}\right) < 0$ where *CIR_{STS}*(*maxPathIdx_{STS}*) is the value of the STS CIR at the STS max path index maxPathIdx_{STS} and *̅C̅I̅R̅_̅{̅S̅Y̅N̅C̅}̅*̅(̅*̅m̅a̅x̅P̅a̅t̅h̅I̅d̅x̅_̅{̅S̅Y̅N̅C̅}̅*̅)̅ is the value of the conjugate of SYNC CIR (gain compensated) at the index maxPathIdx_{SYNC},

maxPathIdx_{STS} is the index where the STS CIR has the maximum power (i.e., the index associated with the peak value of the STS CIR) and maxPathIdx_{SYNC} is the index where the SYNC CIR has the maximum power (i.e., the index associated with the peak value of the SYNC CIR).

Equation 4 yields good results in perfect environments but can lead to false rejections due to the fact that the max path indices for the SYNC and STS CIRs might be different due to interference. That is, multipath reflection of the UWB frame may lead to the peaks of the SYNC CIR and the STS CIR being located at different samples / indices along the horizontal axis. As is known in the art, the samples / indices on the horizontal axis of the CIR of Figure 8 represent different time bins. For the magnitude check, this is not a problem because the power of the signals is compared and so the sign doesn't matter in the (i)² + (q)² calculation used to derive the power of the maximum peaks. However, for the inversion check, it is possible to have two peaks for the SYNC and STS CIRs which have real and imaginary parts with different signs. This would directly impact the inversion check.

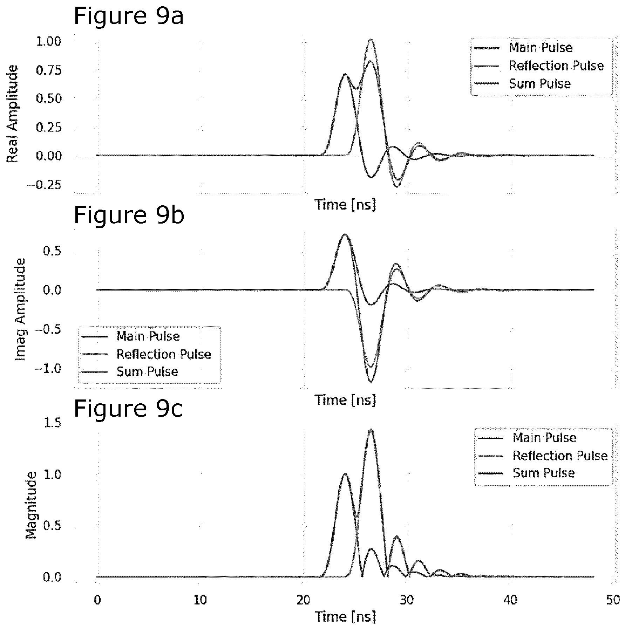

Figures 9a to 9c show an example UWB pulse under non-ideal circumstances. The UWB pulse is represented by a main pulse (i.e., the intended signal), a reflection pulse (i.e., a reflection or multi-path component of the UWB pulse) and a sum pulse (i.e., the summation of the other two pulses). Figure 9a shows the real part of the UWB pulse, Figure 9b shows the imaginary part of the UWB pulse and Figure 9c shows the magnitude of the UWB pulse.

In this example, the UWB pulse is based on a Butterworth pulse which is typically used by a FiRa PHY that is interfered with by a secondary reflection that is shifted in time and attenuated by a few Decibels. As is apparent from the figure, the UWB pulse has two peaks for the SYNC and STS CIRs with real and imaginary parts that have different signs.

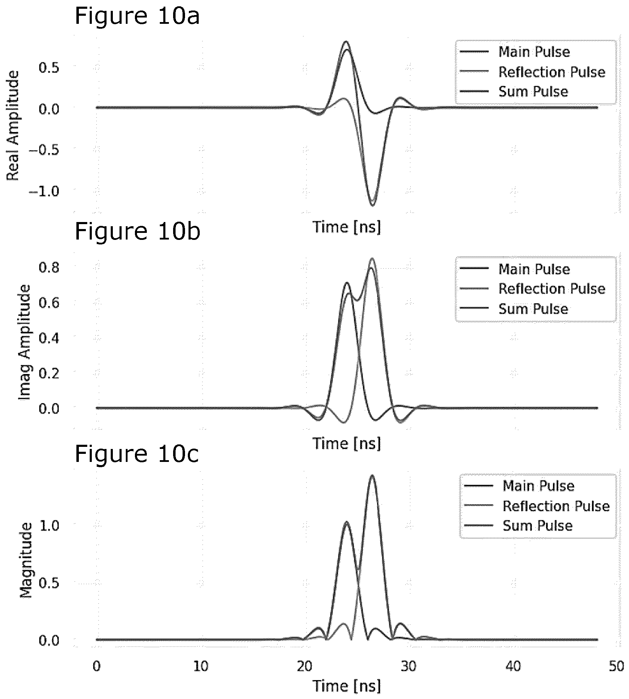

Figures 10a to 10c show another example UWB pulse under non-ideal circumstances. The UWB pulse is represented by a main pulse, a reflection pulse (i.e., a reflection or multi-path component of the UWB pulse) and a sum pulse (i.e., the summation of the other two pulses). Figure 10a shows the real part of the UWB pulse, Figure 10b shows the imaginary part of the UWB pulse and Figure 10c shows the magnitude of the UWB pulse.

In this example, the UWB pulse is based on a Butterworth Lin Phase pulse that is used by the car connectivity consortium (CCC) specification. As is apparent from a comparison of Figures 9a-9c and 10a-10c, the same results are observed for different UWB pulse standards.

A UWB receiver typically down-samples the real signal to a discrete number of points based on a down-sampling rate given by the hardware.

Figure 11 shows an example down-sampled version of the pulse of Figures 9a-9c, according to a common down-sampling rate. This is what is interpreted by the UWB receiver. As is apparent from the figure, the down-sampled pulse includes two peaks which have equivalent power levels. Therefore, the UWB receiver might randomly select one of the peaks during the acquisition of the SYNC field or the STS field. This could result in the positions (along the horizontal axis) of the SYNC CIR peak and the STS CIR peak being different from one another, and therefore causing Equation 4 to fail.

In some embodiments, Equation 4 can be adapted to take into account the potential interfered signals that may cause a false inversion check that are discussed above.

It can be beneficial for the comparison to occur at the same index on the horizontal axis for the SYNC and STS CIRs. This is because the above problem is caused by the fact that the maximum detected values of the SYNC and STS CIRs might be apart by a few nanoseconds. However, the shape of the signal should be comparable if a fixed timestamp is used. Therefore, in some embodiments, Equation 5 is used: $real \left({CIR}_{STS}\left({maxPathIdx}_{STS}\right)∗\overline{{CIR}_{SYNC} \left({maxPathIdx}_{STS}\right)}\right) < 0$ wherein comparing the polarity of the SYNC CIR at the first index to a polarity of the STS CIR at the first index includes: comparing the polarity of the SYNC CIR at an index associated with the peak amplitude value of the SYNC CIR with the polarity of the STS CIR at an index associated with the peak amplitude value of the SYNC CIR. In these embodiments the inversion check may also include determining an index associated with the peak amplitude value of the SYNC CIR; and setting the index associated with the peak amplitude value of the SYNC CIR as the first index.

Alternatively, in some embodiments Equation 6 is used: $real \left({CIR}_{STS}\left({maxPathIdx}_{SYNC}\right)∗\overline{{CIR}_{SYNC} \left({maxPathIdx}_{SYNC}\right)}\right) < 0$ wherein comparing the polarity of the SYNC CIR at the first index to a polarity of the STS CIR at the first index includes comparing the polarity of the SYNC CIR at an index associated with the peak amplitude value of the STS CIR with the polarity of the STS CIR at the index associated with the peak amplitude value of the STS CIR. In these embodiments, the inversion check may also include determining an index associated with the peak amplitude value of the STS CIR; and setting the index associated with the peak amplitude value of the STS CIR as the first index.

In either of these embodiments, the inversion check includes comparing a polarity of the SYNC CIR at a first index to a polarity of the STS CIR at the (same) first index. The first index may be the index associated with the peak amplitude value of either the SYNC CIR or the index associated with the peak amplitude value of the STS CIR, or any other suitable index.

An inversion check using one of equations 5 or 6 may be described in words as multiplying a real component of the STS CIR, taken at the first index, by a complex conjugate of the SYNC CIR, taken at the first index, to provide a comparison value, and determining if the comparison value is less than zero.

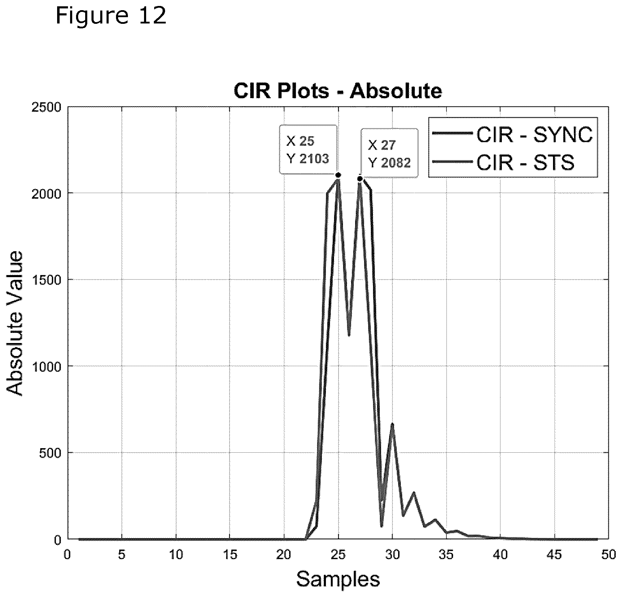

Figure 12 shows a plot of the absolute values of a SYNC CIR and an STS CIR, with samples on the horizontal axis, for an example UWB frame with a Hamming distance of zero (i.e., the received STS field perfectly matches the expected STS field). In this example, the reflection and the main paths are two taps apart. The SYNC and STS CIRs have peaks at slightly different taps (25 and 27 in the figure). In this example, the magnitude of the SYNC and STS CIR peaks are comparable, and the difference therebetween is below the predetermined magnitude difference threshold. Therefore, the UWB frame passes the magnitude check.

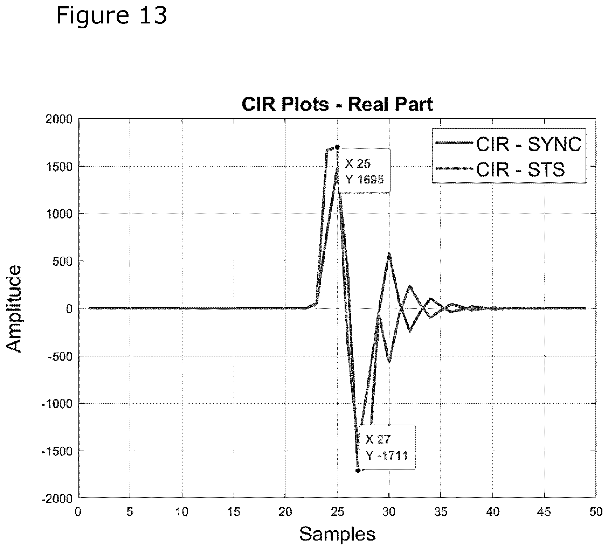

Figure 13 shows a plot of the real part of the SYNC CIR and the STS CIR against samples, for the example UWB frame of Figure 12. As is apparent from the figure, the real parts of the SYNC CIR peak and the STS CIR peak have opposite polarities to one another. Therefore, the example UWB frame would fail an inversion check using Equation 4, even though the Hamming distance is zero. This is another circumstance in which it is preferable to use one of Equation 5 or 6 instead of Equation 4.

The above-described method also helps to mitigate the risk of a so-called ghost peak attack, wherein the attacker device synchronizes with the two ranging devices (e.g., a phone and a car) and injects a signal with a random STS field which overlaps with the STS field sent by the legitimate sender for distance estimation. The attacker STS field thereby creates noise in the channel estimate that can lead to the receiver potentially misinterpreting this noise for the first path estimate of the legitimate signal, yielding a distance reduction.

The above-described method may be applied to applications related to UWB-based fare collection in public transport scenarios, UWB-based payments, physical access control including car access, location-based systems, IoT devices, and any other suitable application or devices.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A method for performing ultra-wide band, UWB, radio frequency, RF, frame validation, wherein an UWB frame comprises:
a synchronisation header, SYNC, field wherein the SYNC field is suitable for synchronisation between a transmitter and a receiver, and
a scrambled timestamp sequence, STS, field wherein the STS field is suitable for providing additional integrity and security for ranging measurements;
the method comprising:
receiving a SYNC channel impulse response, CIR, of an UWB frame;
receiving an STS CIR of the UWB frame;
comparing a peak amplitude value of the SYNC CIR to a peak amplitude value of the STS CIR, wherein:
if a difference between the peak amplitude value of the SYNC CIR and the peak amplitude value of the STS CIR is greater than a predetermined magnitude difference threshold, then:
rejecting the UWB frame;
else:
comparing a polarity of the SYNC CIR to a polarity of the STS CIR, wherein:
if the polarity of the SYNC CIR is different to the polarity of the STS CIR, then:
rejecting the UWB frame;
else:
accepting the UWB frame.

2. The method of claim 1, wherein comparing the polarity of the SYNC CIR to the polarity of the STS CIR comprises comparing a polarity of the SYNC CIR at a first index to a polarity of the STS CIR at a second index.

3. The method of claim 2, wherein:
the first index is associated with the peak of the SYNC CIR and the second index is associated with the peak of the STS CIR; or
the first index is same as the second index.

4. The method of claim 2, wherein the first index is same as the second index.

5. The method of claim 4, wherein the first index is either: an index associated with the peak amplitude value of the SYNC CIR, or an index associated with the peak amplitude value of the STS CIR.

6. The method of claim 4, wherein the method further comprises:
determining an index associated with the peak amplitude value of the SYNC CIR; and setting the index associated with the peak amplitude value of the SYNC CIR as the first index.

7. The method of claim 4, wherein the method further comprises:
determining an index associated with the peak amplitude value of the STS CIR; and setting the index associated with the peak amplitude value of the STS CIR as the first index.

8. The method of any preceding claim, wherein comparing the polarity of the SYNC CIR at the first index to a polarity of the STS CIR comprises:
multiplying a real component of the STS CIR, by a complex conjugate of the SYNC CIR, to provide a comparison value; and
determining if the comparison value is less than zero.

9. The method of any preceding claim, wherein the method further comprises:
defining the predetermined magnitude difference threshold based on a desired security level, wherein the desired security level is defined by an acceptable Hamming distance range, such that there is an acceptable probability of an attacker randomly guessing an STS field which has a Hamming distance within the acceptable Hamming distance range, wherein the acceptable probability is defined by a user.

10. The method of any preceding claim, wherein the SYNC CIR and the STS CIR are gain compensated CIRs.

## Amended claims

### Amended claims in accordance with Rule 137(2) EPC.

1. A method (630) for performing ultra-wide band, UWB, radio frequency, RF, frame validation, wherein an UWB frame comprises:
a synchronisation header, SYNC, field wherein the SYNC field is suitable for synchronisation between a transmitter and a receiver, and
a scrambled timestamp sequence, STS, field wherein the STS field is suitable for providing additional integrity and security for ranging measurements;
the method (630) comprising:
receiving a SYNC channel impulse response, CIR (631), of an UWB frame;
receiving an STS CIR (632) of the UWB frame;
**characterized in that** the method (630) further comprises:
comparing (633) a peak amplitude value of the SYNC CIR (631) to a peak amplitude value of the STS CIR (632), wherein:
if a difference between the peak amplitude value of the SYNC CIR (631) and the peak amplitude value of the STS CIR (632) is greater than a predetermined magnitude difference threshold, then:
rejecting (634) the UWB frame;
else:
comparing (635) a polarity of the SYNC CIR (631) to a polarity of the STS CIR (632), wherein:
if the polarity of the SYNC CIR (631) is different to the polarity of the STS CIR (632), then:
rejecting (634) the UWB frame; else:
accepting (636) the UWB frame.

2. The method (630) of claim 1, wherein comparing (635) the polarity of the SYNC CIR (631) to the polarity of the STS CIR (632) comprises comparing a polarity of the SYNC CIR (631) at a first index to a polarity of the STS CIR (632) at a second index.

3. The method (630) of claim 2, wherein:
the first index is associated with the peak of the SYNC CIR (631) and the second index is associated with the peak of the STS CIR (632); or
the first index is same as the second index.

4. The method (630) of claim 2, wherein the first index is same as the second index.

5. The method (630) of claim 4, wherein the first index is either: an index associated with the peak amplitude value of the SYNC CIR (631), or an index associated with the peak amplitude value of the STS CIR (632).

6. The method (630) of claim 4, wherein the method (630) further comprises:
determining an index associated with the peak amplitude value of the SYNC CIR (631); and setting the index associated with the peak amplitude value of the SYNC CIR (631) as the first index.

7. The method (630) of claim 4, wherein the method (630) further comprises:
determining an index associated with the peak amplitude value of the STS CIR (632); and setting the index associated with the peak amplitude value of the STS CIR (632) as the first index.

8. The method (630) of any preceding claim, wherein comparing (635) the polarity of the SYNC CIR (631) at the first index to a polarity of the STS CIR (632) comprises:
multiplying a real component of the STS CIR (632), by a complex conjugate of the SYNC CIR (632), to provide a comparison value; and
determining if the comparison value is less than zero.

9. The method (630) of any preceding claim, wherein the method (630) further comprises:
defining the predetermined magnitude difference threshold based on a desired security level, wherein the desired security level is defined by an acceptable Hamming distance range, such that there is an acceptable probability of an attacker randomly guessing an STS field which has a Hamming distance within the acceptable Hamming distance range, wherein the acceptable probability is defined by a user.

10. The method (630) of any preceding claim, wherein the SYNC CIR (631) and the STS CIR (632) are gain compensated CIRs.
